# NEUE EUROPÄISCHE PATENTSCHRIFT

(11) **EP 2 679 853 B2**
(45) Veröffentlichungstag und Bekanntmachung des Hinweises auf die Entscheidung über den Einspruch: **25.12.2019**
(45) Hinweis auf die Patenterteilung: 07.09.2016
(21) Anmeldenummer: 13174016.9
(22) Anmeldetag: 27.06.2013
(51) Int. Cl.: F16D 65/097, F16D 55/226

(54) **Scheibenbremse für ein Nutzfahrzeug sowie Bremsbelag für eine Scheibenbremse**
Disc brake for a commercial vehicle and brake cover for a disk brake
Frein à disques pour un véhicule utilitaire et garniture de frein pour un frein à disques

(30) Priorität: 28.06.2012 DE 102012012832
(43) Veröffentlichungstag der Anmeldung: 01.01.2014
(73) Patentinhaber: KNORR-BREMSE Systeme für Nutzfahrzeuge GmbH, 80809 München (DE)
(72) Erfinder: Camilo-Martinez, Jose, 82008 Unterhaching (DE)
(74) Vertreter: Specht, Peter

(56) Entgegenhaltungen:
- EP-A1- 0 112 255
- WO-A1-2009/046818
- WO-A1-2012/074108
- KR-A- 20080 088 942
- US-A1- 2001 013 448

## Beschreibung

Die Erfindung betrifft eine Scheibenbremse für ein Nutzfahrzeug nach dem Oberbegriff des Anspruchs 1 sowie einen Bremsbelag für eine Scheibenbremse.

Bei einer Bremsung erfolgt eine Zuspannung der Bremsbeläge mittels einer pneumatisch oder elektromotorisch betätigbaren Zuspanneinrichtung, wobei durch Andrücken des aktionsseitigen Bremsbelages gegen die Bremsscheibe der als Schiebesattel ausgebildete Bremssattel nachfolgend entgegen der Zuspannrichtung verschoben wird unter Mitnahme und Anpressen des gegenüberliegenden, reaktionsseitigen Bremsbelages an die Bremsscheibe.

Zur Sicherung der jeweils in einem Belagschacht eingesetzten Bremsbeläge in Umfangsrichtung der Bremsscheibe sind an einem ortsfesten Bremsträger Bremsträgerhörner vorgesehen, die den Belagträgerschacht begrenzen und an denen die Bremsbeläge in Funktion unter Aufnahme des Bremsmoments anliegen.

Eine axiale Bewegung der Bremsbeläge zur Bremsscheibe hin ist ebenso möglich wie nach Beendigung der Bremsung in eine entgegengesetzte Richtung, in eine wieder kraftfreie Ausgangsposition. Dabei liegen die Bremsbeläge, insbesondere der reaktionsseitige, drucklos an der Bremsscheibe an.

Durch Vibrationen, Erschütterungen und Querbeschleunigungen bei Kurvenfahrten kann jedoch der Bremsbelag an der Bremsscheibe zur Anlage kommen, was im Fahrbetrieb zu Restschleifmomenten führt mit der Folge eines höheren Verschleißes sowohl der Bremsbeläge wie auch der Bremsscheibe, woraus sich ein erhöhter Kraftstoffverbrauch ergibt, der sich betriebskostensteigernd auswirkt.

Dabei kann durch ein mögliches Überschreiten des zulässigen Schleifmoments die Bremsscheibe bzw. der Bremsbelag heiß laufen, wodurch sich in der Folge eine Verkürzung der Standzeit der relevanten Funktionsteile ergibt.

Darüber hinaus ist nicht gewährleistet, dass sich die Bremsbeläge von der Bremsscheibe lösen, wenn der Bremsvorgang abgebrochen wird. Insbesondere dann, wenn beispielsweise die Bremsbeläge durch Korrosion an der Bremsscheibe anhaften, reichen die fahrbedingten Erschütterungen nicht aus, um eine kontaktfreie Position der Bremsbeläge mit Sicherheit während der Phase der Nichtbremsung zu erreichen.

Ein durch Lösen der Bremsbeläge von der Bremsscheibe erzielbares Lüftspiel, also der Abstand zwischen dem Bremsbelag und der Bremsscheibe, ist nicht definiert, so dass ein Schleifen der Bremsbeläge an der Bremsscheibe nicht vollständig vermieden werden kann.

In der WO 2012/074108 A1 sowie der EP 0 112 255 A1 ist jeweils eine Scheibenbremse offenbart, bei der der reaktionsseitige Bremsbelag mittels eines Halteelements in jede Richtung am Bremssattel gehalten ist. D.h., dieser Bremsbelag ist außerhalb eines Bremsträgers positioniert.

Aus der US 2001/013448 A1 ist eine Scheibenbremse bekannt, bei der die Bremsbeläge in einem Belagschacht des Bremsträgers angeordnet sind und sich daran seitlich abstützen. Dabei weist der reaktionsseitige Bremsbelag an seiner Belagträgerplatte einen Haltebügel auf, in den eine angeformte Nase des Bremssattels eingesteckt ist. Als weiterer Stand der Technik wird die EP0989320A genannt.

Der Erfindung liegt die Aufgabe zugrunde, eine Scheibenbremse sowie einen Bremsbelag der gattungsgemäßen Art so weiterzuentwickeln, dass ihre Standzeit verbessert sowie die Betriebskosten gesenkt werden.

Diese Aufgabe wird durch eine Scheibenbremse mit den Merkmalen des Anspruchs 1 und durch einen Bremsbelag mit den Merkmalen des Anspruchs 10 gelöst.

Neben der seitlichen Führung des Bremsbelages ist durch die konstruktive Ausbildung gemäß der Erfindung auch eine axiale Fixierung des reaktionsseitigen Bremsbelages gegeben, wobei sich beim Lösen der Bremse auch ein erzwungenes Lösen des Bremsbelages ergibt und zwar in einem Maße, das dem vorbestimmten Lüftspiel entspricht. D.h., der reaktionsseitige Bremsbelag liegt dauerhaft an der die Montageöffnung des Bremssattels begrenzenden Wandung an.

Beim Lösen der Bremse, wenn die Zuspannvorrichtung außer Eingriff gebracht wird und der Bremssattel insoweit unbelastet ist und eine Ausgangsposition einnimmt, ist ein Freilauf zwischen dem Bremsbelag und der Bremsscheibe gebildet.

Eine schleifende Anlage des Bremsbelages während des ungebremsten Fahrbetriebs, wie dies, wie beschrieben, bislang möglich ist, ist damit ausgeschlossen.

Die zum Stand der Technik beschriebenen Nachteile werden somit verhindert. Diesbezüglich sei insbesondere vermerkt, dass nun der Abrieb des Bremsbelages ausschließlich bei einer gewollten Bremsung erfolgt, so dass die Standzeit des Bremsbelages in einem signifikanten Umfang verlängert wird. Betriebskostensenkend wirkt sich auch der durch die Vermeidung von Restschleifmomenten geringere Kraftstoffverbrauch aus.

Alles in allem ergibt sich eine Kostenreduzierung, die vor allem deshalb bedeutsam ist, weil derartige Scheibenbremsen aufgrund der hohen Laufleistung von Nutzfahrzeugen, in denen gattungsgemäße Scheibenbremsen zum Einsatz kommen, einem besonderen Verschleiß unterliegen.

Die Ausnehmung, vorzugsweise zwei Ausnehmungen, sind als Ausklinkungen an der die Montageöffnung für die Bremsbeläge begrenzenden Kante des Sattelrückens eingebracht, wobei diese Kante als Steg ausgebildet sich in Fortsetzung der zugeordneten Innenwand der Montageöffnung des Bremssattels nach oben, also von der Einschubseite für die Bremsbeläge hin erstreckt. In seiner Dicke ist dieser Steg so bemessen, dass der lichte Abstand der beiden Bügel des Halteelementes zur Belagträgerplatte relativ gering gehalten werden kann.

Nach der Erfindung sind die Ausnehmungen beidseitig einer am Sattelrücken vorgesehenen Befestigung für einen Haltebügel angeordnet, vorzugsweise in gleichem Abstand dazu, wobei der Haltebügel, der erfindungsgemäß die Montageöffnung überspannt, die Bremsbeläge unter Mitwirkung von Belaghaltefedern in den Belagschächten hält.

Die Ausnehmungen werden zweckmäßigerweise bei der Herstellung des Bremssattels mit eingebracht, da dieser im Regelfall als Gussteil ausgebildet ist, so dass hier keine zusätzlichen Kosten entstehen.

Nach einem weiteren Gedanken der Erfindung ist vorgesehen, das Halteelement aus Blech, vorzugsweise einem Federblech herzustellen, das insbesondere formschlüssig mit der Belagträgerplatte verbunden ist. Hierzu können geeignete Rastmittel vorgesehen sein, die seitens der Belagträgerplatte aus einem pilzförmigen Zapfen besteht, auf den das Halteblech aufgesteckt ist, das eine Bohrung mit einem gezackten Rand aufweist, dessen Zacken die durch den Pilzkopf gebildete Hinterschneidung hintergreifen. Dabei ist die Dicke des Halteelements so dimensioniert, dass sie etwa dem Abstand der Anlagefläche des Pilzkopfes zur Belagträgerplatte entspricht.

Anstelle eines Halteblechs kann das Halteelement auch an die Belagträgerplatte angeformt sein, wenn diese ebenfalls aus Gusseisen besteht. In diesem Fall ist jedes Halteelement im Querschnitt T-förmig ausgebildet, d.h., das Halteelement weist zwei parallele Hinterschneidungen im Sinne von Nuten auf, in die die Randbereiche der Ausnehmung in aufgeschobener Stellung des Bremsbelages eingreifen.

Bei Ausbildung der Belagträgerplatte aus Blech können die Halteelemente auch durch Stanzen eingebracht sein, bevor der Reibbelag aufgebracht wird.

Die beschriebene, formschlüssige Anbindung des Halteelements an der Belagträgerplatte kann auch erreicht werden, indem nach dem Aufbringen des Halteelements auf einen angeformten Zapfen dieser zu einem Nietkopf verformt wird.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer Draufsicht
- Figur 2: einen Teilausschnitt der Scheibenbremse, gemäß der Linie II-II in Figur 1
- Figur 3: einen Bremsbelag nach der Erfindung in einer Draufsicht
- Figur 4: einen Teil des Bremsbelages in einer Rückansicht
- Figur 5: eine Einzelheit des Bremsbelages in perspektivischer Ansicht.

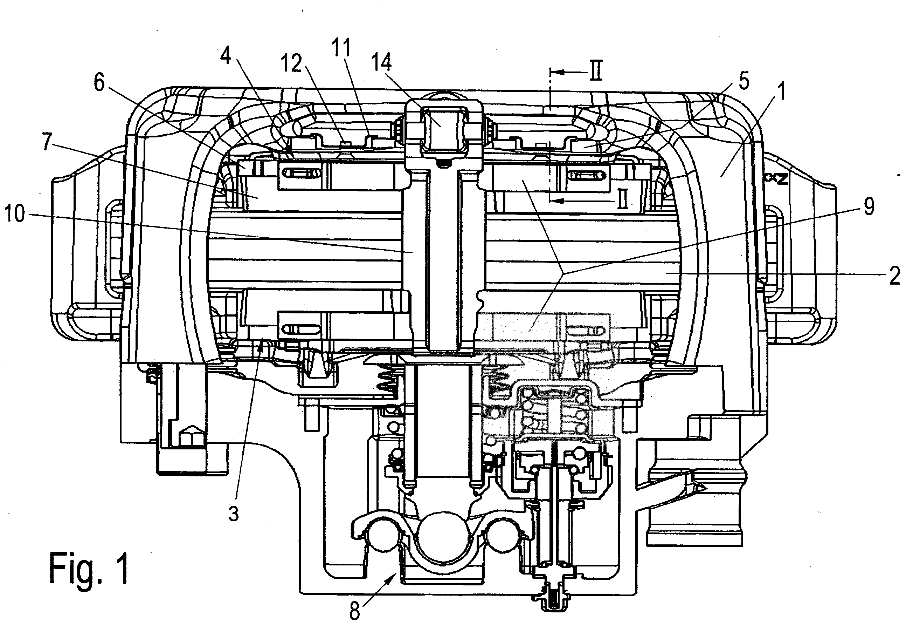

In der Figur 1 ist in schematischer Darstellung eine Scheibenbremse erkennbar, mit einem eine Bremsscheibe 2 übergreifenden, als Schiebesattel ausgebildeten Bremssattel 1, in dem ein zuspannseitiger Bremsbelag 3 sowie ein reaktionsseitiger Bremsbelag 4 angeordnet sind.

Im Falle einer Bremsung wird zunächst der zuspannseitige Bremsbelag 3 mittels einer Zuspanneinrichtung 8 gegen die Bremsscheibe 2 gepresst, während nachfolgend, aufgrund der Reaktionskräfte, durch Mitnahme des sich verschiebenden Bremssattels 1 der reaktionsseitige Bremsbelag 4 gegen die Bremsscheibe 2 gepresst wird.

Beide Bremsbeläge 3, 4 bestehen aus einer Belagträgerplatte 6 und einem darauf befestigten Reibbelag 7, der bei einer Bremsung die Bremsscheibe 2 kontaktiert.

An jeder Belagträgerplatte 6 ist eine Belaghaltefeder 9 befestigt, die im Zusammenwirken mit einem Haltebügel 10 den Bremsbelag 3, 4 unter Vorspannung in einem Bremsschacht des Bremssattels 1 oder eines Bremsträgers hält.

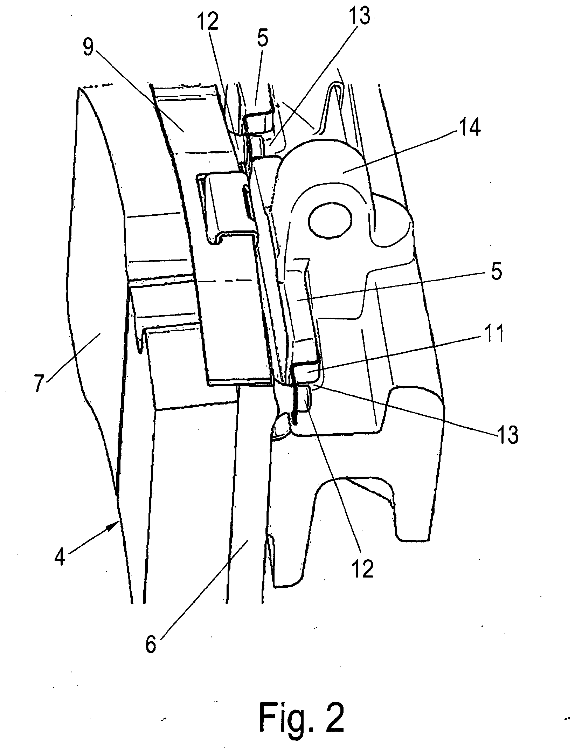

Erfindungsgemäß weist die Belagträgerplatte 6 des reaktionsseitigen Bremsbelages 4 auf ihrer dem Reibbelag 7 abgewandten Rückseite zweiflüglige Halteelemente 11 auf, die jeweils in einer Ausnehmung 13 einliegen und diese beidseitig hintergreifen. Dabei ist die Ausnehmung 13 in einer eine Montageöffnung des Bremssattels 1 in Einschieberichtung des Bremsbelages 4 oberseitig begrenzende Mitte vorgesehen, die als Steg 5 ausgebildet ist, wie insbesondere in der Figur 2 sehr deutlich zu erkennen ist.

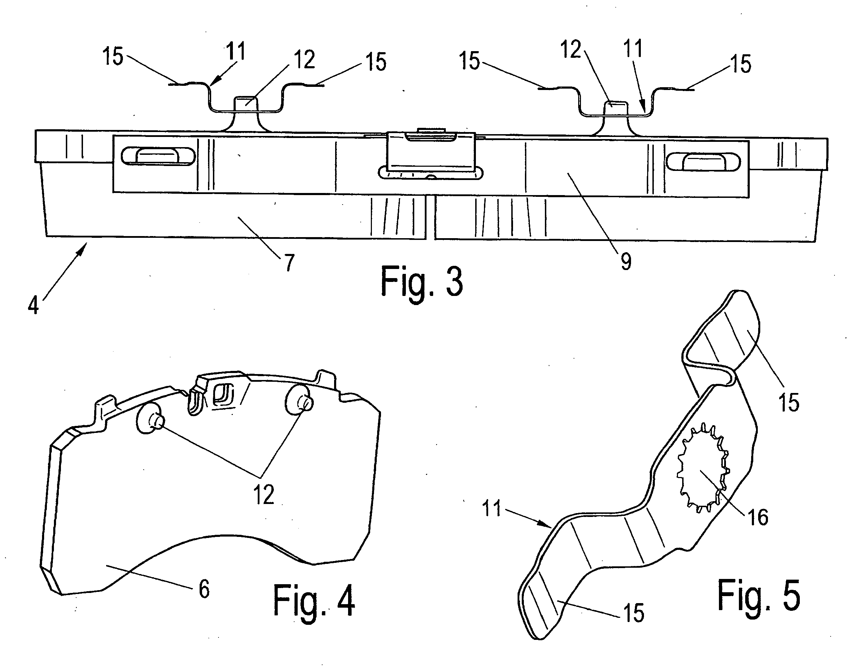

In der Figur 5 ist das Halteelement 11 als Einzelheit dargestellt. Bei dieser Ausführungsvariante ist das Halteelement 11 als Blechformteil ausgebildet, vorzugsweise aus einem Federblech, mit einer zentralen Öffnung 16, deren Rand gezackt ist, unter Bildung einer Vielzahl von kleinen federnden Zungen.

Beidseitig der Öffnung 16 erstrecken sich Flügel 15, die an der, bezogen auf den Bremsbelag 4, Rückseite des Steges 5 anliegen.

Wie besonders deutlich in der Figur 3 zu erkennen ist, sind die Halteelemente 11 erfindungsgemäß an Zapfen 12 gehalten, die an die Belagträgerplatte 6 auf ihrer dem Reibbelag 7 abgewandten Rückseite angeordnet sind, bei einer Ausbildung der Belagträgerplatte 6 als Gussteil, angegossen. Hierbei weist jeder Zapfen 12 eine Hinterschneidung auf, die von dem gezackten Rand der Öffnung 16 hintergriffen wird, so dass ein Formschluss gebildet ist.

In der Figur 4 ist die Belagträgerplatte 6 als Einzelheit erkennbar vor der Komplettierung, d.h., vor dem Aufbringen des Reibbelages 7 und dem Anbringen der Halteelemente 11.

Wie insbesondere die Figur 1 sehr deutlich zeigt, sind die Halteelemente 11, bezogen auf ein Anschlussteil 14 des Bremssattels 1, an dem der Haltebügel 10 befestigt ist, spiegelsymmetrisch angeordnet.

## Patentansprüche

1. Scheibenbremse für ein Nutzfahrzeug,
mit einem eine Bremsscheibe (2) übergreifenden, vorzugsweise als Schiebesattel ausgebildeten Bremssattel (1) und einem zuspannseitigen Bremsbelag (3) und einem auf einem Sattelrücken zugeordneten reaktionsseitigen Bremsbelag (4),
wobei der Bremssattel (1) eine Montageöffnung zur Montage der Bremsbeläge (3 und 4) und einen Haltebügel aufweist, wobei der Haltebügel die Montageöffnung überspannt; wobei
die Bremsbeläge (3, 4) jeweils eine Belagträgerplatte (6) mit einem Reibbelag (7) aufweisen und die quer zur Zuspannrichtung gesichert in einem Belagschacht des ortsfesten Bremsträgers gelagert sind,
**dadurch gekennzeichnet, dass**
die Belagträgerplatte (6) des reaktionsseitigen Bremsbelages (4) auf ihrer dem Reibbelag (7) abgewandten Rückseite mit mindestens einem zweiflügligen Halteelement (11) versehen ist, das eine Ausnehmung (13) beidseitig hintergreift,
die an einer die Montageöffnung des Bremssattels (1) in Einschubrichtung des Bremsbelages (4) oberseitig begrenzenden Kante des Sattelrückens vorgesehen ist.

2. Scheibenbremse nach Anspruch 1, **dadurch gekennzeichnet, dass** die Ausnehmung (13) in die als Steg (5) ausgebildete Kante eingebracht ist.

3. Scheibenbremse nach Anspruch 1 oder 2, **dadurch gekennzeichnet, dass** zwei spiegelsymmetrisch angeordnete Halteelemente (11) vorgesehen sind.

4. Scheibenbremse nach Anspruch 3, **dadurch gekennzeichnet, dass** die Halteelemente (11) als Blechformteil ausgebildet sind.

5. Scheibenbremse nach Anspruch 3 oder 4, **dadurch gekennzeichnet, dass** die Halteelemente (11) aus Federblech bestehen.

6. Scheibenbremse nach einem der Ansprüche 3 bis 5, **dadurch gekennzeichnet, dass** die Halteelemente (11) an Zapfen (12) der Belagträgerplatte (6) befestigt sind.

7. Scheibenbremse nach Anspruch 6, **dadurch gekennzeichnet, dass** die Zapfen (12) jeweils eine Hinterschneidung aufweisen, die ein Rand einer Öffnung (16) des Halteelementes (11) eingreifen.

8. Scheibenbremse nach Anspruch 7, **dadurch gekennzeichnet, dass** der Rand der Öffnung (16) gezackt ist.

9. Scheibenbremse nach einem der Ansprüche 3 bis 8, **dadurch gekennzeichnet, dass** die Halteelemente (11) unter Federspannung am Steg (5) anliegen.

10. Bremsbelag für eine Scheibenbremse nach einem der vorhergehenden Ansprüche mit einer länglichen Belagträgerplatte (6) und einem darauf befestigten Reibbelag (5), **dadurch gekennzeichnet, dass**
an einem Längsrand der dem Reibbelag (7) abgewandten Rückseite der Belagträgerplatte (6) zumindest ein zweiflügliges Halteelement (11) angeordnet ist, derart, dass das Halteelement (11) form- oder stoffschlüssig an Zapfen (12) der Belagträgerplatte (6) befestigt ist.

11. Bremsbelag nach Anspruch 10, **dadurch gekennzeichnet, dass** die Halteelemente (11) form- oder stoffschlüssig an Zapfen (12) der Belagträgerplatte (6) befestigt sind.

12. Bremsbelag nach Anspruch 11, **dadurch gekennzeichnet, dass** die Zapfen (12) an die Belagträgerplatte (6) angeformt sind.

13. Bremsbelag nach Anspruch 10, **dadurch gekennzeichnet, dass** das Halteelement (11) an die Belagträgerplatte (6) angeformt und quer zu deren Längserstreckung im Querschnitt T-förmig ausgebildet ist.

## Claims

1. A disc brake for a utility vehicle,
comprising a brake calliper (1) that straddles a brake disc (2) and is preferably designed as a sliding calliper, an application-side brake pad (3) and a reaction-side brake pad (4) that is assigned to a calliper back, the brake calliper (1) having a fitting opening for fitting the brake pads (3, 4) and a retaining bracket, the retaining bracket spanning the fitting opening;
the brake pads (3, 4) each having a pad carrier plate (6) with a friction lining (7) and being mounted secured at right angles to the direction of application in a pad slot in the fixed-location brake carrier,
**characterised in that**
the pad carrier plate (6) of the reaction-side brake pad (4) is provided on its rear side facing away from the friction lining (7) with at least one double-winged retaining element (11) that engages on both sides in a recess (13) provided on an edge of the calliper back that delimits the upper side of the fitting opening of the brake calliper (1) in the direction of insertion of the brake pad (4).

2. A disc brake according to claim 1, **characterised in that** the recess (13) is incorporated in the edge, which takes the form of a web (5).

3. A disc brake according to claim 1 or 2, **characterised in that** two mirror-symmetrically arranged retaining elements are provided.

4. A disc brake according to claim 3, **characterised in that** the retaining elements (11) take the form of pre-formed sheet metal parts.

5. A disc brake according to claim 3 or 4, **characterised in that** the retaining elements (11) are made of spring steel sheet.

6. A disc brake according any one of claims 3 to 5, **characterised in that** the retaining elements (11) are secured to pins (12) of the pad carrier plate (6).

7. A disc brake according to claim 1 or 5, **characterised in that** the pins (12) each have an undercut that engages with an edge of an opening (16) of the retaining element (11).

8. A disc brake according to claim 7, **characterised in that** the edge of the opening (16) is toothed.

9. A disc brake according to any one of claims 3 to 8, **characterised in that** the retaining elements (11) are spring-loaded against the web (5).

10. A brake pad for a disc brake according to any one of the preceding claims comprising an elongated pad carrier plate (6) and a friction lining (5) secured to the pad carrier plate (6), **characterised in that**
at least one double-winged retaining element (11) is arranged on a longitudinal edge of the rear side of the pad carrier plate (6) facing away from the friction lining (7) such that retaining element (11) is secured in a positive locking manner or bonded to pins (12) of the pad carrier plate (6).

11. A brake pad according to claim 10, **characterised in that** the retaining elements (11) are secured in a positive locking manner or bonded to pins (12) of the pad carrier plate (6).

12. A brake pad according to claim 11, **characterised in that** the pins (12) are moulded onto the pad carrier plate (6).

13. A brake pad according to claim 10, **characterised in that** the retaining element (11) is moulded onto the pad carrier plate (6), is positioned transversely to the longitudinal extension of the pad carrier plate (6) and has a T-shaped cross section.

## Revendications

1. Frein à disque d'un véhicule utilitaire,
comprenant un étrier (1) de frein, constitué de préférence sous la forme d'un étrier coulissant, chevauchant un disque (2) de frein et une garniture (3) de frein du côté du serrage et une garniture (4) de frein du côté de la réaction associée à un dos de l'étrier, l'étrier (1) de frein ayant une ouverture de montage pour le montage des garnitures (3 et 4) de frein et un arceau de maintien, l'arceau de maintien recouvrant l'ouverture de montage ; dans lequel
les garnitures (3, 4) de frein ont chacune une plaque (6) de support de garniture ayant une garniture (7) de friction et sont montées en étant fixées transversalement à la direction de serrage dans un puits de garniture du flasque de frein à poste fixe,
**caractérisé en ce que**
la plaque (6) de support de garniture de la garniture (4) de frein du côté de la réaction est pourvue, sur sa face arrière loin de la garniture (7) de friction, d'au moins un élément (11) de retenue à deux ailes, qui prend par l'arrière des deux côtés une cavité (13) prévue sur un bord, délimitant vers le haut l'ouverture de montage de l'étrier (1) de frein dans la direction d'introduction de la garniture (4) de frein, du dos de l'étrier.

2. Frein à disque suivant la revendication 1, **caractérisé en ce que** l'évidement (13) est ménagé dans le bord constitué en entretoise (5).

3. Frein à disque suivant la revendication 1 ou 2, **caractérisé en ce qu'**il est prévu deux éléments (11) de retenue, disposés d'une manière symétrique comme en un miroir.

4. Frein à disque suivant la revendication 3, **caractérisé en ce que** les éléments (11) de retenue sont constitués de pièces conformées en tôle.

5. Frein à disque suivant la revendication 3 ou 4, **caractérisé en ce que** les éléments (11) de retenue sont constitués de tôle pour ressort.

6. Frein à disque suivant l'une des revendications 3 à 5, **caractérisé en ce que** les éléments (11) de retenue sont fixés à des tenons (12) de la plaque (6) de support de garniture.

7. Frein à disque suivant la revendication 6, **caractérisé en ce que** les tenons (12) ont chacun une contredépouille, qui est en prise avec un bord d'une ouverture (16) de l'élément (11) de retenue.

8. Frein à disque suivant la revendication 7, **caractérisé en ce que** le bord de l'ouverture (16) est dentelé.

9. Frein à disque suivant l'une des revendications 3 à 8, **caractérisé en ce que** les éléments (11) de maintien s'appliquent à l'entretoise (5) sous contrainte d'un ressort.

10. Garniture d'un frein à disque suivant l'une des revendications précédentes, comprenant une plaque (6) oblongue de support de garniture et une garniture (5) de friction, qui y est fixée, **caractérisée en ce que** au moins un élément (11) de retenue à deux ailes est disposé sur un grand bord de la face arrière loin de la garniture (7) de friction de la plaque (6) de support de garniture, de manière à ce que l'élément (11) de retenue soit fixé, à complémentarité de forme ou à coopération de matière, aux tenons (12) de la plaque (6) de support de garniture.

11. Garniture de frein suivant la revendication 10, **caractérisée en ce que** les éléments (11) de retenue sont fixé, à complémentarité de forme ou à coopération de matière, à des tenons (12) de la plaque (6) de support de garniture.

12. Garniture de frein suivant la revendication 11, **caractérisée en ce que** les tenons (12) viennent de matière avec la plaque (6) de support de garniture.

13. Garniture de frein suivant la revendication 10, **caractérisée en ce que** l'élément (11) de retenue vient de matière avec la plaque (6) de support de garniture et est constitué en forme de T en section transversale transversalement à son étendue longitudinale.
